# EUROPÄISCHE PATENTSCHRIFT

(11) **EP 3 290 770 B1**
(45) Veröffentlichungstag und Bekanntmachung des Hinweises auf die Patenterteilung: **17.04.2019**
(21) Anmeldenummer: 17186855.7
(22) Anmeldetag: 18.08.2017
(51) Int. Cl.: F16P 3/14, G01V 8/20, G01V 15/00, G06K 9/00

(54) **ÜBERWACHUNGSEINRICHTUNG**
MONITORING DEVICE
DISPOSITIF DE SURVEILLANCE

(30) Priorität: 01.09.2016 DE 102016116350
(43) Veröffentlichungstag der Anmeldung: 07.03.2018
(73) Patentinhaber: Sick AG, 79183 Waldkirch (DE)
(72) Erfinder: HULM, Christian, 79194 Gundelfingen (DE)

(56) Entgegenhaltungen:
- EP-A1- 2 693 362
- DE-A1-102004 038 906
- DE-U1- 29 920 715

## Beschreibung

Die vorliegende Erfindung betrifft eine Überwachungseinrichtung nach dem Oberbegriff von Anspruch 1 und eine Aufzeichnungsstation nach dem Oberbegriff von Anspruch 5.

Es besteht das Problem, den Zugang oder Ausgang einer Maschine gegen den Zutritt eines Menschen zu sichern, gleichzeitig soll allerdings eine Materialzufuhr und eine Materialausfuhr erlaubt sein.

Oft ist es auch der Fall, dass für eine Maschine, je nachdem welches Material zugeführt wird, ein unterschiedliches Materialbearbeitungsprogramm wirksam sein muss. Daher muss der Maschinensteuerung bekannt sein, welches Material, z. B. welches Modell einer Karosserie einer Lackieranlage zugeführt werden soll. Oder ein Betreiber einer Anlage möchte eine Prozesssicherheit erhöhen, also prüfen, ob ein Maschinenablaufprogramm zu einem Material, welches gerade der Maschine zugeführt werden soll, passt.

Eine bekannte Funktion, die unter dem Begriff 'Muting' bekannt ist, gibt dem Kunden die Möglichkeit, mit Hilfe von externen Mutingsensoren Material ein- und auszufahren. Für Muting benötigt man externe Mutingsensoren, die Aufwände bei der Montage und Wartung verursachen. Ebenfalls benötigen diese Platz, der in Produktionshallen stets knapp und teuer ist.

Ebenfalls gibt es horizontal angebrachte Lichtvorhänge, um über eine Objektmustererkennung Mensch und Material voneinander zu unterscheiden. Die horizontale Anbringung des Sicherheitslichtvorhanges benötigt ebenfalls Platz, der bei vielen Anwendungen bzw. Applikationen nicht vorhanden ist.

Die DE 10 2004 038 906 B4 offenbart eine Überwachungseinrichtung mit mindestens einer berührungslos wirkenden Schutzeinrichtung und einer Auswerteeinheit, die ein Steuersignal abgibt, das abhängig ist von einem zulässigen oder unzulässigen Objekt, das in ein einen Überwachungsbereich begrenzendes Schutzfeld der berührungslos wirkenden Schutzeinrichtung eindringt, wobei wenigstens eine kontaktlose Erkennungseinrichtung zum Erkennen des Objektes vorgesehen ist, mit der auf einer am Objekt angeordneten Marke abgelegte Objektinformationen lesbar sind und die kontaktlose Erkennungseinrichtung zur Weitergabe der Objektinformationen mit der Auswerteeinheit verbunden ist.

Die vorliegende Erfindung betrifft Industrie 4.0. Industrie 4.0 ist ein Organisationgestaltungskonzept, das aus vier grundlegenden Organisationsgestaltungsprinzipien besteht, nämlich Vernetzung, Informationstransparenz, technische Assistenz und dezentrale Entscheidungen. Diese Prinzipien unterstützen Unternehmen bei der Identifikation und Implementierung von Industrie-4.0-Szenarien. Ziel ist eine Fähigkeit von Maschinen, Geräten, Sensoren und Menschen sich miteinander zu vernetzen und über das Internet der Dinge oder das Internet der Menschen zu kommunizieren. Beispielsweise werden digitale Fabrikmodelle mit Sensordaten angereichert, um ein virtuelles Abbild der realen Welt zu erstellen, wodurch eine Informationstransparenz gebildet wird. Technische Assistenz ist dabei die Fähigkeit von Assistenzsystemen, den Menschen mit Hilfe von aggregierten, visualisierten und verständlichen Informationen zu unterstützen, um fundierte Entscheidungen treffen zu können und auftretende Probleme kurzfristig zu lösen. Dezentrale Entscheidungen werden getroffen, um durch Systeme eigenständige Entscheidungen zu treffen und Aufgaben möglichst autonom zu erledigen. Nur in Ausnahmefällen, bei Störungen oder Zielkonflikten werden die Aufgaben an eine höhere Instanz übertragen.

Die DE 299 20 715 U1 offenbart eine Vorrichtung zur Überwachung eines Gefahrenbereiches einer Maschine, der einen Eingang und Ausgang aufweist, mit Lichtschranken, die am Eingang bzw. Ausgang angeordnet sind, zum Erzeugen eines Unterbrechungssignales, wenn sich ein Mensch oder ein Gegenstand im Eingang bzw. Ausgang befindet, Mutingsensoren, die dem Eingang bzw. Ausgang zugeordnet sind, zum Erzeugen eines Unterdrückungssignals, wenn ein als zulässig angesehener Gegenstand den Eingang bzw. Ausgang passiert, wobei die Lichtschranken und Mutingsensoren des Eingangs bzw. Ausgangs an eine Auswerteeinrichtung angeschlossen sind, die einen Schalter zum Abschalten der Maschine betätigt, wenn ein Unterbrechungssignal und kein dem Unterbrechungssignal zugeordnetes Unterdrückungssignal vorliegt.

Die EP 2 693 362 A1 offenbart Erfassungssystem zur Montage an einem Förderband mit mindestens einem Erfassungssensor zur Erfassung von Objekteigenschaften von auf dem Förderband geförderten Objekten und mit einer Auswertungseinheit zur Ausgabe von aus den Objekteigenschaften abgeleiteten Objektinformationen an einem festlegbaren Ausgabepunkt des Förderbandes, wobei die Auswertungseinheit dafür ausgebildet ist, die Objekte anhand der Objekteigenschaften in mindestens zwei Objektklassen zu unterteilen, und dass ein Ausgabepunkt an dem Förderband für jede Objektklasse festlegbar ist.

Die EP 1 793 244 A2 offenbart ein System zum automatischen Steuern einer vorübergehenden Deaktivierung einer photoelektrischen Sicherheitsbarriere, die sich an einem Eingang befindet, zu einem gegebenen Risikobereich, um den Durchgang eines Objekts oder einer Person durch den Eingang zu bestimmen, um eine Anzahl von vorbestimmten Sicherheitsfunktionen zu aktivieren. Das System weist mindestens eine Identifizierungsvorrichtung auf, die an einem Objekt oder einer Person angeordnet ist und einen Identifikationscode enthält, der dem Objekt oder der Person zugeordnet ist; eine Lesevorrichtung zum Lesen des Identifikationscodes in der Identifikationsvorrichtung, wenn das Objekt oder die Person sich in einem vorbestimmten Abstand vom Eingang der Lichtschranke befindet.

Eine Aufgabe besteht darin, Objekte zu identifizieren und Informationen über die Objekte bereitzustellen. Eine weitere Aufgabe der Erfindung besteht darin, eine Überwachungseinrichtung bereitzustellen, mit der ein Mensch von Material unterschieden werden kann, ohne Mutingsensoren zu verwenden und ohne den Lichtvorhang horizontal anzuordnen.

Die Aufgabe wird gemäß Anspruch 1 gelöst durch eine Überwachungseinrichtung mit mindestens einem Sicherheitslichtvorhang und einer Steuer- und Auswerteeinheit, die ein Steuersignal abgibt, das abhängig ist von einem zulässigen oder unzulässigen Objekt, das in ein einen Überwachungsbereich begrenzendes Schutzfeld des Sicherheitslichtvorhangs eindringt, wobei die Steuer- und Auswerteeinheit räumlich getrennt von dem Sicherheitslichtvorhang angeordnet ist, wobei zwischen der Steuer- und Auswerteeinheit und dem Sicherheitslichtvorhang eine erste sichere Schnittstelle vorgesehen ist, und wenigstens eine Aufzeichnungsstation vorgesehen ist, wobei die Aufzeichnungsstation durch einen messenden Lichtvorhang gebildet ist, wobei zwischen der Steuer- und Auswerteeinheit und dem messenden Lichtvorhang eine zweite sichere Schnittstelle vorgesehen ist, wobei wenigstens eine kontaktlose Erkennungseinrichtung zum Erkennen des Objektes vorgesehen ist, mit der auf einem am Objekt und/oder an einer Trägereinrichtung angeordneten Transponders abgelegte Objektinformationen lesbar sind und die kontaktlose Erkennungseinrichtung zur Weitergabe der Objektinformationen mit der Überwachungseinrichtung oder der Steuer- und Auswerteeinheit verbunden ist.

Der Sicherheitslichtvorhang ist beispielsweise in Bewegungsrichtung der Objekte nach dem messenden Lichtvorhang bzw. der Aufzeichnungsstation angeordnet. Der Sicherheitslichtvorhang und die Aufzeichnungsstation können dabei auch räumlich getrennt an verschiedenen Plätzen angeordnet sein. Dabei können beispielsweise auch eine oder mehrere Aufzeichnungsstationen und/oder eine oder mehrere Sicherheitslichtvorhänge vorgesehen sein.

Die Aufgabe wird weiter gemäß Anspruch 5 gelöst durch eine Aufzeichnungsstation, wobei die Aufzeichnungsstation durch einen Lichtvorhang gebildet ist zur Erfassung von Strahldaten eines Objektes, wobei eine Steuer- und Auswerteeinheit vorgesehen ist zur Bildung von Objektinformationen und/oder Konturdaten und/oder Konturmuster für die jeweiligen Objektkonturen aus den Strahldaten, wobei die Objektinformationen und/oder die Konturdaten und/oder die Konturmuster in einem elektronischen Speicher der Steuer- und Auswerteeinheit abgespeichert sind, dadurch gekennzeichnet, dass eine Schreibeinrichtung vorgesehen ist, wobei die Schreibeinrichtung ausgebildet ist, jeweils Transponder mit den jeweiligen Objektinformationen und/oder Konturdaten und/oder Konturmustern kontaktlos zu beschreiben.

Die Transponder können sich dabei bereits auf den Objekten befinden oder diese werden, nachdem das Objekt die Aufzeichnungsstation passiert hat, auf dem Objekt aufgebracht. Das kann manuell oder bevorzugt automatisiert durchgeführt werden.

Die Konturdaten und/oder Konturmuster können als Objektkonturen oder Objektinformationen in dem elektronischen Speicher abgespeichert werden.

Bei der Überwachungseinrichtung handelt es sich um ein Sicherheitssystem gemäß Maschinensicherheit beispielsweise gemäß der Norm EN/ISO 13849-1 bzw. der Norm EN/IEC 62061, die beispielsweise den Rahmen für funktionale Sicherheit von sicherheitsbezogenen elektrischen Steuerungssystemen und deren Untersystemen an Maschinen bereitstellt. Bei dem Sicherheitslichtvorhang handelt es sich beispielsweise um eine sichere berührungslose Schutzeinrichtung bzw. einen sicheren optoelektronischen Sensor gemäß EN 61496-1/2.

Durchfährt ein Objekt den messenden Lichtvorhang, überträgt dieser seine Strahldaten, also die Daten für beispielsweise jeden Lichtstrahl des messenden Lichtvorhangs, ob dieser frei oder unterbrochen ist, für jeden Zyklus oder auch als Scan bezeichnet an die Steuer- und Auswerteeinheit über die zweite sichere Schnittstelle. Die Steuer- und Auswerteeinheit bildet aus einer Zwischensumme der Strahldaten für eine Anzahl Zyklen Konturdaten des Objektes und speichert diese Konturdaten ab.

Damit die Aufzeichnungsstation mit dem messenden Lichtvorhang keine Abschaltung der Maschine verursacht, sind die Schaltausgänge des messenden Lichtvorhangs überbrückt, nämlich gemutet oder der messende Lichtvorhang wird lediglich zur Aufzeichnung der Konturdaten verwendet. Nachdem ein Objekt den messenden Lichtvorhang wieder verlassen hat, können beliebig viele weitere Objekte aufgezeichnet werden. Die unterschiedlichen Objektkonturen werden in einem elektronischen Speicher der Steuer- und Auswerteeinheit abgespeichert. Organisatorisch muss natürlich gewährleistet sein, dass nicht ein Mensch selbst als Kontur von dem messenden Lichtvorhang abgetastet und abgespeichert wird.

Wenn das Objekt durch den Überwachungsbereich in Richtung der Maschine eingefahren werden soll, so muss das Objekt den Sicherheitslichtvorhang passieren. Durch den Sicherheitslichtvorhang wird die Kontur des Objektes erfasst.

Durchfährt ein Objekt den Sicherheitslichtvorhang, überträgt dieser seine Strahldaten, also die Daten für beispielsweise jeden Lichtstrahl des Sicherheitslichtvorhangs, ob dieser frei oder unterbrochen ist, für jeden Zyklus oder auch als Scan bezeichnet an die Steuer- und Auswerteeinheit über die erste sichere Schnittstelle. Die Steuer- und Auswerteeinheit bildet aus einer Zwischensumme der Strahldaten für eine Anzahl Zyklen Konturdaten des Objektes und vergleicht diese erfassten Konturdaten mit den gespeicherten Konturdaten. Stimmen diese Konturdaten mit zulässigen Objekten überein, so wird von der Steuer- und Auswerteeinheit kein Abschaltsignal für die Maschine erzeugt. Stimmt die Kontur jedoch nicht mit einer gespeicherten Kontur überein, so wird die Maschine gestoppt oder in einen ungefährlichen Zustand versetzt, um eine Gefährdung einer Person, die sich möglicherweise durch den Überwachungsbereich des Sicherheitslichtvorhangs hindurch bewegt, zu verhindern.

Der Sicherheitslichtvorhang und der messende Lichtvorhang sind vorzugsweise senkrecht angeordnet. Objekte werden dann quer zu dem Lichtvorhang durch den Lichtvorhang hindurch transportiert. Jedoch können die Lichtvorhänge auch in einem Winkel schräg angeordnet sein.

Weiter kann es auch vorgesehen sein, dass ein Objekt-Konturvergleich direkt in einer Auswerteeinheit im Sicherheitslichtvorhang durchgeführt wird.

Dazu werden, wie bereits erläutert, von dem messenden Lichtvorhang die Konturdaten erfasst und über die sichere messende Schnittstelle an die Steuer- und Auswerteeinheit übertragen. Die Steuer- und Auswerteeinheit überträgt die gespeicherten Konturdaten über die erste sichere Schnittstelle an einen Speicher in dem Sicherheitslichtvorhang. In der Auswerteeinheit des Sicherheitslichtvorhangs wird nun ein Konturvergleich zwischen der erfassten aktuellen Kontur und den daraus erzeugten Konturdaten und den gespeicherten Konturdaten durchgeführt. Stimmt die Kontur jedoch nicht mit einer gespeicherten Kontur überein, so wird die Maschine gestoppt oder in einen ungefährlichen Zustand versetzt, um eine Gefährdung einer Person, die sich möglicherweise durch den Überwachungsbereich des Sicherheitslichtvorhangs hindurch bewegt, zu verhindern.

Sobald also eine Kontur über die Aufzeichnungsstation bzw. den messenden Lichtvorhang komplett in der Steuer- und Auswerteeinheit gespeichert wurde, überträgt diese das Konturmuster bzw. die Konturdaten an den Sicherheitslichtvorhang oder an ggf. mehrere erste Lichtvorhänge in einem gebildeten Netzwerk über die sichere Schnittstelle. Dadurch können beispielsweise mehrere Sicherheitslichtvorhänge mit Konturdaten eines einzigen messenden Lichtvorhangs versorgt werden. Beispielsweise kann an einem zentralen Ort eine Konturerfassung durch den messenden Lichtvorhang durchgeführt werden und nach einer Verteilung der Objekte, beispielsweise durch Förderbänder jeweils eine Konturüberprüfung durch jeweils getrennte mehrere Sicherheitslichtvorhänge durchgeführt werden.

Bei der sicheren Schnittstelle kann es sich beispielsweise um ein sicheres Bussystem, oder ein sicheres Netzwerk handeln. Ein Beispiel für ein sicheres Netzwerk ist 'Safety over Ethernet'. Ein Beispiel für ein sicheres Bussystem ist Profibus safe. Zur Fehlersicherheit sind beispielsweise Prüfsummen vorgesehen. Beispielsweise ist die Steuer- und Auswerteeinheit zweikanalig ausgeführt. Dabei kann eine redundante oder eine diversitäre Struktur vorgesehen sein. Im Falle einer redundanten Struktur sind beispielsweise zwei identische Mikrocontroller vorgesehen, die sich gegenseitig überwachen.

Weiter kann es auch vorgesehen sein, dass zwar alle Konturdaten in der Steuer- und Auswerteeinheit gespeichert werden, jedoch das oder die Sicherheitslichtvorhänge die gespeicherten Konturdaten von der zentralen Steuer- und Auswerteeinheit anfordern, beispielsweise über die erste sichere Schnittstelle und dass die gespeicherten Konturdaten dann jeweils an den Sicherheitslichtvorhang übertragen werden, um einen Konturvergleich in der Auswerteeinheit des Sicherheitslichtvorhangs vorzunehmen.

Gemäß der Erfindung entfallen zusätzliche Mutingsensoren. Weiter können die Lichtvorhänge vertikal angeordnet werden, wodurch eine Platzeinsparung in einer Anlage und eine Verringerung des Verdrahtungsaufwandes erfolgt.

Weiter kann gemäß der Erfindung eine nahezu unbegrenzte Anzahl von Objekten sicherheitstechnisch unterschieden und insbesondere von Personen unterschieden werden. Die Objekte können dabei auch unterschiedlichste Formen aufweisen. Eine Unterscheidung, wann ein Objekt den Lichtvorhang verlässt, kann beispielsweise dadurch erfolgen, dass die Objekte beabstandet voneinander bewegt werden und zwischen den Objekten der messende Lichtvorhang bzw. der Sicherheitslichtvorhang wieder frei wird.

Die Objekte müssen gemäß der Erfindung auch nicht manuell eingelernt oder konfiguriert werden, da die Objekte dynamisch im laufenden Prozess aufgezeichnet werden. Daher können auch immer wieder neue Objekte dazu kommen, ohne dass die Lichtvorhänge umprogrammiert werden müssen.

Gemäß der Erfindung sind an dem Sicherheitslichtvorhang optional auch keine sicheren Halbleiterschaltausgänge, sogenannte 'Output Safety Switching Devices', kurz OSSDs mehr notwendig, da eine Kommunikation vollständig über die sicheren Schnittstellen realisiert wird und eine Abschaltung einer Anlage bzw. eine Versetzung einer Anlage in eine sicheren Zustand über die Steuer- und Auswerteeinheit erfolgt.

Bei dem messenden Lichtvorhang kann es sich auch um einen Sicherheitslichtvorhang handeln. Damit werden sichere Konturdaten erzeugt, wodurch eine Sicherheit des Gesamtsystems und/oder der Überwachungseinrichtung erhöht wird.

Durch die Objektidentifikation anhand der Kontur kann abgeglichen werden, ob eine Maschinenkonfiguration zum Objekt passt.

Der Sicherheitslichtvorhang kann auch unabhängig von der Aufzeichnungsstation bzw. dem messenden Lichtvorhang angeordnet sein.

Gemäß der Erfindung ist wenigstens eine kontaktlose Erkennungseinrichtung zum Erkennen des Objektes vorgesehen, mit der auf einen am Objekt und/oder an einer Trägereinrichtung angeordneten Transponders abgelegte Objektinformationen lesbar sind und die kontaktlose Erkennungseinrichtung zur Weitergabe der Objektinformationen mit der Überwachungseinrichtung, also dem Sicherheitslichtvorhang oder der Steuer- und Auswerteeinheit verbunden ist.

Bei der Trägereinrichtung kann es sich beispielsweise um eine Palette, eine Schale oder Ähnliches handeln.

Dadurch ist es möglich, ein Objekt eindeutig aufgrund gespeicherter und gelesener Objektinformationen zu identifizieren und zuzuordnen.

Beispielsweise können die durch die jeweiligen Lichtvorhänge erfassten Konturdaten mit den gelesenen Objektedaten des Objektes verknüpft werden, um umfangreichere Objektdaten zu erhalten.

Beispielsweise identifiziert der messende Lichtvorhang das Objekt über den an Objekten angeordneten Transponder und überträgt die Kennung zusammen mit den erfassten Konturdaten des messenden Lichtvorhangs zu der Steuer- und Auswerteeinheit. Die Steuer- und Auswerteeinheit speichert die erfassten Konturdaten zusammen mit einer erfassten Kennung des Objektes. Wenn sich das Objekt der Maschine und damit dem Sicherheitslichtvorhang nähert bzw. in den Sicherheitsbereich der Maschine einfahren soll, wird das Objekt von dem Sicherheitslichtvorhang ebenfalls über eine kontaktlose Erkennungseinrichtung erkannt, welche den am Objekt oder der Trägereinrichtung angeordneten Transponder erkennt und die Kennung des Transponders wird von der Erkennungseinrichtung ausgelesen. Der Sicherheitslichtvorhang fordert die mit der Kennung des Objektes hinterlegte Kontur in der Steuer- und Auswerteeinheit an. Die Steuer- und Auswerteeinheit überträgt die Konturdaten an den Sicherheitslichtvorhang und dieser führt den Ist/Soll-Konturvergleich durch.

Mittels des Transponders kann abgeglichen werden, ob eine hinterlegte Kontur noch zur gemessenen Kontur passt.

In Weiterbildung der Erfindung ist die kontaktlose Erkennungseinrichtung als Radio Frequenz Identifikation System, kurz RFID System bzw. RFID-Lesegerät ausgebildet.

Eine Identifikation der Objekte mit Radio Frequenz Identifikation (RFID) erlaubt es, die Objekte ohne direkten Sichtkontakt zur Erkennungseinrichtung zu identifizieren. Damit kann die Erkennungseinrichtung auch in Schutzgehäusen oder hinter Schutzabdeckungen angebracht werden. Zusätzlich muss der Transponder nicht sichtbar auf dem Objekt angebracht sein, sondern kann sich in dem Objekt oder an einer besonders dafür geeigneten Stelle befinden.

Das RFID-Lesegerät weist eine Antennenanordnung zur Kommunikation mit dem Transponder bzw. dem RFID-Transponder auf, wobei der Transponder mindestens eine Spule zur Wechselwirkung mit der Antennenanordnung des RFID-Lesergeräts umfasst.

RFID-Systeme (Radio Frequency Identification) werden in Sender/Empfänger-Systemen zum automatischen und berührungslosen Identifizieren und/oder Lokalisieren von RFID-Transpondern mit Radiowellen verwendet. Ein RFID-System umfasst typischerweise zunächst den RFID-Transponder (auch als "Tag" oder "Funketikett" bezeichnet), der eine Antenne umfasst und sich am oder in der Überprüfungsstation befindet. Er umfasst in der Regel einen kennzeichnenden Identifizierungsdaten-Code, der über die Antennenanordnung von dem RFID-Lesegerät des RFID-Systems (auch als "Transceiver" bezeichnet) abgefragt werden kann. Das RFID-Lesegerät umfasst dazu die Antennenanordnung und einen Transceiverschaltkreis (z. B. der EM4095-Chip der Firma EM Microelectronics) zum Auslesen dieser Kennung von dem RFID-Transponder. Zum Auslesen der Kennung von dem RFID-Transponder erzeugt das RFID-Lesegerät typischerweise magnetische Wechselfelder, um Signale an den RFID-Transponder zu übertragen. Der RFID-Transponder ist dazu ausgebildet, nach Erhalt eines entsprechenden Signals vom RFID-Lesegerät ein Daten, insbesondere die Kennung, umfassendes Signal als Antwort an das RFID-Lesegerät zurückzusenden, welches dieses mit der Auswerteeinheit auswertet und weiterverarbeitet.

Bei RFID-Systemen erzeugt das RFID-Lesegerät magnetische Wechselfelder, die nicht nur zum Übertragen der Daten vorgesehen sind, sondern auch dazu dienen können, den RFID-Transponder mit Energie zu versorgen.

Ein RFID-System hat damit den Vorteil, dass der RFID-Transponder keine eigene Stromversorgung benötigt und daher flexibel eingesetzt werden kann. Der RFID-Transponder bezieht seine Energie über Funkwellen bzw. Radiowellen aus dem RFID-Lesegerät. Der RFID-Transponder wird über die Antennenanordnung des RFID-Lesegeräts angesprochen und antwortet dem RFID-Lesegerät mit einer in dem RFID-Transponder abgespeicherten Information. Die vom Transponder des RFID-Systems übertragene Information wird von der Antennenanordnung empfangen und kann anschließend in der Auswerteeinheit ausgewertet werden. Die gespeicherte Information auf dem Transponder enthält mindestens eine Kennung, nämlich die Identifizierungsdaten, die den RFID-Transponder identifiziert.

Da die Erkennung des RFID-Transponders über Funkwellen erfolgt, ist das System sehr robust gegenüber Umwelteinflüssen. Daher kann das RFID-Lesesystem mit dem RFID-Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des RFID-Transponders über Funkwellen erfolgt, ist im Unterschied zu einer optischen Lösung keine Sichtverbindung zwischen dem Sicherheitslichtvorhang bzw. dem messenden Lichtvorhang und dem Transponder notwendig.

Vorteilhaft ist die kontaktlose Erkennungseinrichtung in dem Sicherheitslichtvorhang integriert.

Dies hat den Vorteil, dass die gesamte Überwachungseinrichtung oder die gesamte Aufzeichnungsstation in einer Vorrichtung integriert ist. Es entsteht dadurch nur der Verdrahtungsaufwand zu einer Vorrichtung. Die Überwachungseinrichtung oder Aufzeichnungseinrichtung kann dadurch auch mechanisch sehr einfach installiert werden. Zusätzlich verringert sich der Platzbedarf für die gesamte Überwachungseinrichtung.

In Weiterbildung der Erfindung ist vor dem senkrecht angeordneten Sicherheitslichtvorhang oder vor dem senkrecht angeordneten messenden Lichtvorhang noch zusätzlich ein horizontaler Lichtvorhang angeordnet. Damit sind zwei Lichtvorhänge in einem rechten Winkel zueinander angeordnet. Damit wird das Objekt beispielsweise gleichzeitig in 2 verschiedenen Raumrichtungen erfasst und vermessen bzw. geprüft. Dadurch kann eine Personensicherheit oder eine Prozesssicherheit weiter erhöht werden, da die Objekte genauer erfasst und geprüft werden können.

In Weiterbildung ist die Aufzeichnungsstation durch einen messenden Lichtvorhang oder einen Sicherheitslichtvorhang gebildet. Der messende Lichtvorhang ist dabei kein Sicherheitssensor, sondern lediglich zur Vermessung der Objekte bestimmt. Ein Sicherheitslichtvorhang kann jedoch neben seiner Sicherheitsfunktion ebenfalls zur Vermessung der Objekte ausgebildet sein.

In Weiterbildung der Erfindung ist die Schreibeinrichtung als RFID-Schreibeinrichtung ausgebildet. Dadurch können die Daten berührungslos über eine Antenne auf den Transponder geschrieben werden.

In Weiterbildung der Erfindung ist zu jeder Objektkontur eine eindeutige Kennung vorgesehen. Dadurch braucht nicht mehr direkt die Objektkontur verglichen werden, sondern lediglich die zugeordnete Kennung, welche eindeutig jeweils einer bestimmten Kontur zugeordnet ist.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis Figur 5: jeweils eine Überwachungseinrichtung;
- Figur 6: eine Aufzeichungsstation;
- Figur 7: eine Überwachungseinrichtung mit einem Sicherheitslichtvorhang.

In den nachfolgenden Figuren sind identische Teile mit identischen Bezugszeichen versehen.

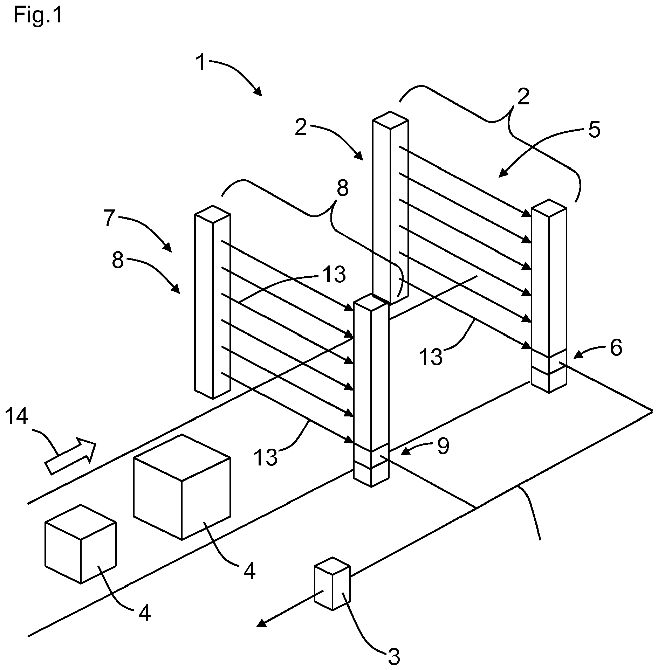

Figur 1 zeigt eine Überwachungseinrichtung 1 mit mindestens einem Sicherheitslichtvorhang 2 und einer Steuer- und Auswerteeinheit 3, die ein Steuersignal abgibt, das abhängig ist von einem zulässigen oder unzulässigen Objekt 4, das in ein einen Überwachungsbereich begrenzendes Schutzfeld 5 des Sicherheitslichtvorhangs 2 eindringt, wobei die Steuer- und Auswerteeinheit 3 räumlich getrennt von dem Sicherheitslichtvorhang 2 angeordnet ist, wobei zwischen der Steuer- und Auswerteeinheit 3 und dem Sicherheitslichtvorhang 2 eine erste sichere Schnittstelle 6 vorgesehen ist, und wenigstens eine Aufzeichnungsstation 7 vorgesehen ist, wobei die Aufzeichnungsstation 7 durch einen messenden Lichtvorhang 8 gebildet ist, wobei zwischen der Steuer- und Auswerteeinheit 3 und dem messenden Lichtvorhang 8 eine zweite sichere Schnittstelle 9 vorgesehen ist, wobei der Sicherheitslichtvorhang 2 in Bewegungsrichtung 14 der Objekte nach dem messenden Lichtvorhang 8 angeordnet ist.

Durchfährt ein Objekt 4 den messenden Lichtvorhang 8, überträgt dieser seine Strahldaten, also die Daten für beispielsweise jeden Lichtstrahl 13 des messenden Lichtvorhangs 8, ob dieser frei oder unterbrochen ist, für jeden Zyklus oder auch als Scan bezeichnet an die Steuer- und Auswerteeinheit 3 über die zweite sichere Schnittstelle 9. Die Steuer- und Auswerteeinheit 3 bildet aus einer Zwischensumme der Strahldaten für eine Anzahl Zyklen Konturdaten des Objektes 4 und speichert diese Konturdaten ab.

Der messende Lichtvorhang 8 wird beispielsweise lediglich zur Aufzeichnung der Konturdaten verwendet. Nachdem ein Objekt 4 den messenden Lichtvorhang 8 wieder verlassen hat, können beliebig viele weitere Objekte 4 aufgezeichnet werden. Die unterschiedlichen Objektkonturen werden in einem elektronischen Speicher der Steuer- und Auswerteeinheit 3 abgespeichert.

Wenn das Objekt 4 durch den Überwachungsbereich in Richtung der Maschine eingefahren werden soll, so muss das Objekt 4 den Sicherheitslichtvorhang 2 passieren. Durch den Sicherheitslichtvorhang 2 wird die Kontur des Objektes 4 erfasst.

Durchfährt ein Objekt 4 den Sicherheitslichtvorhang 2, überträgt dieser seine Strahldaten, also die Daten für beispielsweise jeden Lichtstrahl 13 des Sicherheitslichtvorhangs 2, ob dieser frei oder unterbrochen ist, für jeden Zyklus oder auch als Scan bezeichnet an die Steuer- und Auswerteeinheit 3 über die erste sichere Schnittstelle 6. Die Steuer- und Auswerteeinheit 3 bildet aus einer Zwischensumme der Strahldaten für eine Anzahl Zyklen Konturdaten des Objektes 4 und vergleicht diese erfassten Konturdaten mit den gespeicherten Konturdaten. Stimmen diese Konturdaten mit zulässigen Objekten 4 überein, so wird von der Steuer- und Auswerteeinheit 3 kein Abschaltsignal für die Maschine erzeugt. Stimmt die Kontur jedoch nicht mit einer gespeicherten Kontur überein, so wird die Maschine gestoppt oder in einen ungefährlichen Zustand versetzt, um eine Gefährdung einer Person, die sich möglicherweise durch den Überwachungsbereich des Sicherheitslichtvorhangs hindurch bewegt, zu verhindern.

Der Sicherheitslichtvorhang 2 und der messende Lichtvorhang 8 sind gemäß Figur 1 senkrecht angeordnet. Objekte 4 werden dann quer zu dem Lichtvorhang 2 bzw. 8 durch den Lichtvorhang 2 bzw. 8 hindurch transportiert.

Weiter kann es auch vorgesehen sein, dass ein Objekt-Konturvergleich direkt in einer Auswerteeinheit im Sicherheitslichtvorhang durchgeführt wird.

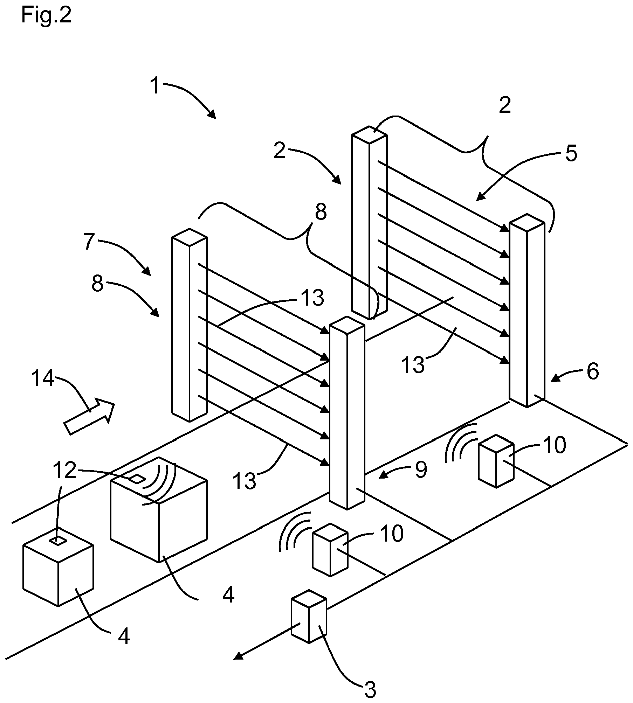

Bei dem messenden Lichtvorhang 8 kann es sich auch um einen Sicherheitslichtvorhang 2 handeln. Damit werden sichere Konturdaten erzeugt, wodurch eine Sicherheit des Gesamtsystems und/oder der Überwachungseinrichtung erhöht wird.
Gemäß Figur 2 ist wenigstens eine kontaktlose Erkennungseinrichtung 10 zum Erkennen des Objektes 4 vorgesehen, mit der auf einen am Objekt 4 und/oder an einer Trägereinrichtung angeordneten Transponders 12 abgelegte Objektinformationen lesbar sind und die kontaktlose Erkennungseinrichtung 10 zur Weitergabe der Objektinformationen mit der Überwachungseinrichtung 1, also dem Sicherheitslichtvorhang 2 oder der Aufzeichnungsstation 7, also dem messenden Lichtvorhang 8 verbunden ist.

Bei der Trägereinrichtung kann es sich beispielsweise um eine Palette, eine Schale oder Ähnliches handeln.

Gemäß Figur 2 identifiziert der messende Lichtvorhang 8 das Objekt 4 über den am Objekt 4 angeordneten Transponder 12 und überträgt die Kennung zusammen mit den erfassten Konturdaten des messenden Lichtvorhangs 8 zu der Steuer- und Auswerteeinheit 3. Die Steuer- und Auswerteeinheit 3 speichert die erfassten Konturdaten zusammen mit einer erfassten Kennung des Objektes 4. Wenn sich das Objekt der Maschine und damit dem Sicherheitslichtvorhang 2 nähert bzw. in den Sicherheitsbereich der Maschine einfahren soll, wird das Objekt 4 von dem Sicherheitslichtvorhang ebenfalls über eine kontaktlose Erkennungseinrichtung 10 erkannt, welche den am Objekt oder der Trägereinrichtung angeordneten Transponder 12 erkennt und die Kennung des Transponders 12 wird ausgelesen. Der Sicherheitslichtvorhang 2 fordert die mit der Kennung des Objektes 4 hinterlegte Kontur in der Steuer- und Auswerteeinheit 3 an. Die Steuer- und Auswerteeinheit 3 überträgt die Konturdaten an den Sicherheitslichtvorhang 2 und dieser führt den Ist/Soll-Konturvergleich durch.

Mittels des Transponders 12 kann abgeglichen werden, ob eine hinterlegte Kontur noch zur gemessenen Kontur passt.

Gemäß Figur 2 ist die kontaktlose Erkennungseinrichtung 10 als Radio Frequenz Identifikation System, kurz RFID System bzw. RFID-Lesegerät ausgebildet.

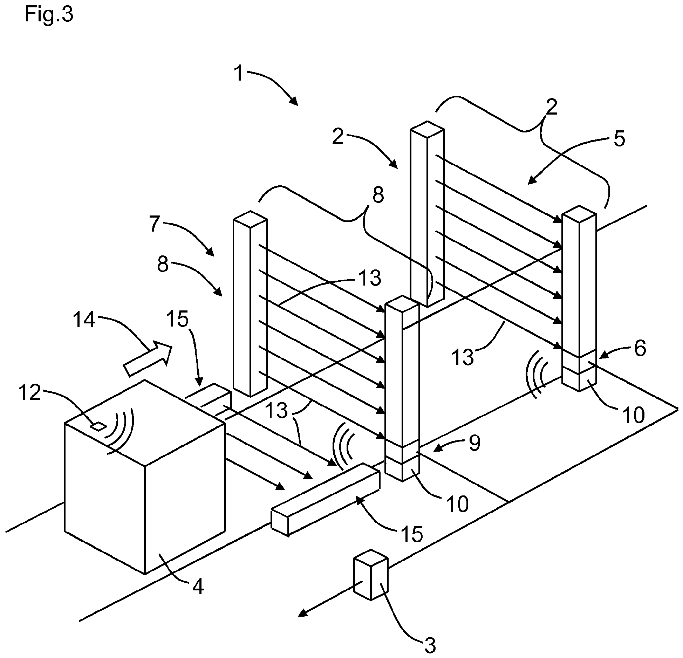

Gemäß Figur 3 ist vor dem senkrecht angeordneten Sicherheitslichtvorhang noch zusätzlich ein horizontaler Lichtvorhang 15 angeordnet. Damit sind zwei Lichtvorhänge in einem rechten Winkel zueinander angeordnet. Damit wird das Objekt beispielsweise gleichzeitig in 2 verschiedenen Raumrichtungen erfasst und vermessen bzw. geprüft. Dadurch kann eine Personensicherheit oder eine Prozesssicherheit weiter erhöht werden, da die Objekte genauer erfasst und geprüft werden können.

Gemäß Figur 3 ist die Erkennungseinrichtung 10 im Gehäuse des Lichtvorhangs 2 bzw. 8 angeordnet.

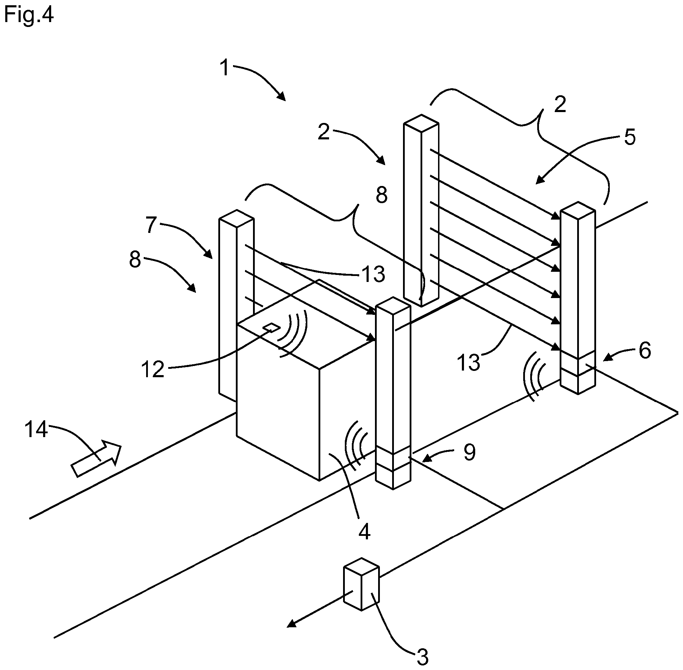

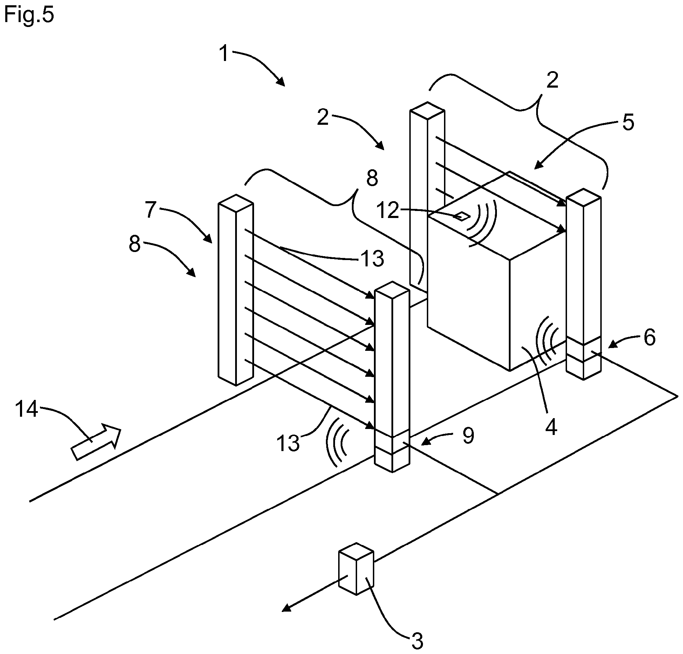

Die Figuren 4 und 5 zeigen die Durchfahrt eines zulässigen Objektes durch den Sicherheitslichtvorhang 2 und den messenden Lichtvorhang 8.

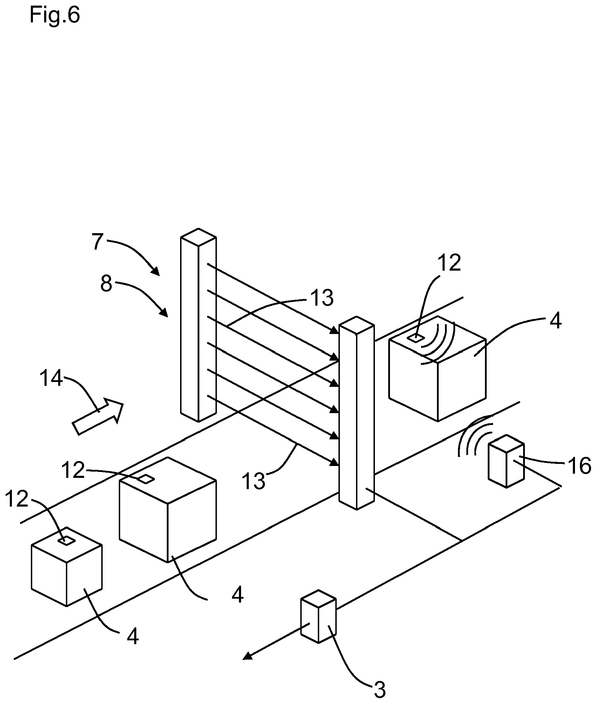

Figur 6 zeigt eine Aufzeichnungsstation 7, wobei die Aufzeichnungsstation 7 durch einen Lichtvorhang gebildet ist zur Erfassung von Strahldaten eines Objektes 4, wobei eine Steuer- und Auswerteeinheit 3 vorgesehen ist zur Bildung von Objektinformationen und/oder Konturdaten und/oder Konturmustern für die jeweiligen Objektkonturen aus den Strahldaten, wobei die Objektinformationen und/oder die Konturdaten und/oder die Konturmuster in einem elektronischen Speicher der Steuer- und Auswerteeinheit abgespeichert sind, dadurch gekennzeichnet, dass eine Schreibeinrichtung 16 vorgesehen ist, wobei die Schreibeinrichtung 16 ausgebildet ist, jeweils Transponder 12 mit den jeweiligen Objektinformationen und/oder Konturdaten und/oder Konturmustern kontaktlos zu beschreiben.

Die Aufzeichnungsstation ist beispielsweise durch einen messenden Lichtvorhang 8 oder einen Sicherheitslichtvorhang 2 gebildet. Die Schreibeinrichtung 16 ist als RFID-Schreibeinrichtung ausgebildet. Zu jeder Objektkontur ist beispielsweise eine eindeutige Kennung vorgesehen.

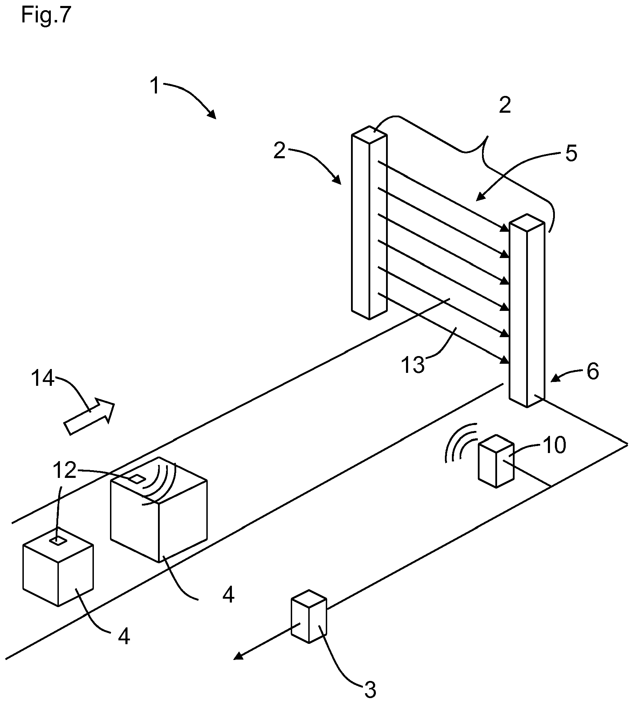

Figur 7 zeigt eine Überwachungseinrichtung 1 mit mindestens einem Sicherheitslichtvorhang 2 und einer Steuer- und Auswerteeinheit 3, die ein Steuersignal abgibt, das abhängig ist von einem zulässigen oder unzulässigen Objekt 4, das in ein einen Überwachungsbereich begrenzendes Schutzfeld 5 des Sicherheitslichtvorhangs 2 eindringt, die Steuer- und Auswerteeinheit 3 räumlich getrennt von dem Sicherheitslichtvorhang 2 angeordnet ist, wobei zwischen der Steuer- und Auswerteeinheit 3 und dem Sicherheitslichtvorhang 2 eine erste sichere Schnittstelle 6 vorgesehen ist, wobei wenigstens eine kontaktlose Erkennungseinrichtung 10 zum Erkennen des Objektes 4 vorgesehen ist, mit der auf einem am Objekt 4 und/oder an einer Trägereinrichtung angeordneten Transponder 12 abgelegte Objektinformationen lesbar sind und die kontaktlose Erkennungseinrichtung 10 zur Weitergabe der Objektinformationen mit der Überwachungseinrichtung 1 oder der Steuer- und Auswerteeinheit 3 verbunden ist.

Bezugszeichen:
1 Überwachungseinrichtung
2 Sicherheitslichtvorhang
3 Steuer- und Auswerteeinheit
4 Objekt
5 Schutzfeld
6 erste sichere Schnittstelle
7 Aufzeichnungsstation
8 messender Lichtvorhang
9 zweite sichere Schnittstelle
10 Erkennungseinrichtung
12 Transponder
13 Lichtstrahl
14 Bewegungsrichtung
15 horizontaler Lichtvorhang
16 Schreibeinrichtung

## Patentansprüche

1. Überwachungseinrichtung (1) mit mindestens einem Sicherheitslichtvorhang (2) und einer Steuer- und Auswerteeinheit (3), die ein Steuersignal abgibt, das abhängig ist von einem zulässigen oder unzulässigen Objekt (4), das in ein einen Überwachungsbereich begrenzendes Schutzfeld (5) des Sicherheitslichtvorhangs (2) eindringt,
wobei
die Steuer- und Auswerteeinheit (3) räumlich getrennt von dem Sicherheitslichtvorhang (2) angeordnet ist, wobei zwischen der Steuer- und Auswerteeinheit (3) und dem Sicherheitslichtvorhang (2) eine erste sichere Schnittstelle (6) vorgesehen ist,
**dadurch gekennzeichnet, dass**
wenigstens eine Aufzeichnungsstation (7) vorgesehen ist, wobei die Aufzeichnungsstation (7) durch einen messenden Lichtvorhang (8) gebildet ist, wobei zwischen der Steuer- und Auswerteeinheit (3) und dem messenden Lichtvorhang (8) eine zweite sichere Schnittstelle (9) vorgesehen ist, wobei eine Schreibeinrichtung (16) vorgesehen ist, wobei die Schreibeinrichtung (16) ausgebildet ist, jeweils Transponder (12) mit den jeweiligen Objektinformationen und/oder Konturdaten und/oder Konturmustern kontaktlos zu beschreiben, wobei wenigstens eine kontaktlose Erkennungseinrichtung (10) zum Erkennen des Objektes (4) vorgesehen ist, mit der auf einem am Objekt (4) und/oder an einer Trägereinrichtung angeordneten Transponder (12) abgelegte Objektinformationen lesbar sind und die kontaktlose Erkennungseinrichtung (10) zur Weitergabe der Objektinformationen mit der Überwachungseinrichtung (1) oder der Steuer- und Auswerteeinheit (3) verbunden ist.

2. Überwachungseinrichtung nach mindestens einem der vorhergehenden Ansprüche, **dadurch gekennzeichnet, dass** die kontaktlose Erkennungseinrichtung (10) als Radio Frequenz Identifikation System ausgebildet ist.

3. Überwachungseinrichtung nach mindestens einem der vorhergehenden Ansprüche, **dadurch gekennzeichnet, dass** die kontaktlose Erkennungseinrichtung (10) in dem Sicherheitslichtvorhang (2) und/oder dem messenden Lichtvorhang (8) integriert ist.

4. Überwachungseinrichtung nach mindestens einem der vorhergehenden Ansprüche, **dadurch gekennzeichnet, dass** vor dem senkrecht angeordneten Sicherheitslichtvorhang (2) oder vor dem senkrecht angeordneten messenden Lichtvorhang (8) noch zusätzlich ein horizontaler Lichtvorhang (15) angeordnet ist.

5. Aufzeichnungsstation (7), wobei die Aufzeichnungsstation (7) durch einen Lichtvorhang gebildet ist, zur Erfassung von Strahldaten eines Objektes (4), wobei eine Steuer- und Auswerteeinheit (3) vorgesehen ist zur Bildung von Objektinformationen und/oder Konturdaten und/oder Konturmuster für die jeweiligen Objektkonturen aus den Strahldaten, wobei die Objektinformationen und/oder die Konturdaten und/oder die Konturmuster in einem elektronischen Speicher der Steuer- und Auswerteeinheit abgespeichert sind,
**dadurch gekennzeichnet, dass**
eine Schreibeinrichtung (16) vorgesehen ist, wobei die Schreibeinrichtung (16) ausgebildet ist, jeweils Transponder (12) mit den jeweiligen Objektinformationen und/oder Konturdaten und/oder Konturmustern kontaktlos zu beschreiben, wobei die Schreibeinrichtung (16) als RFID-Schreibeinrichtung ausgebildet ist.

6. Aufzeichnungsstation (7) nach Anspruch 5, **dadurch gekennzeichnet, dass** die Aufzeichnungsstation (7) durch einen messenden Lichtvorhang (8) oder einen Sicherheitslichtvorhang (2) gebildet ist.

7. Aufzeichnungsstation (7) nach mindestens einem der vorhergenannten Ansprüche 5 bis 6, **dadurch gekennzeichnet, dass** zu jeder Objektkontur eine eindeutige Kennung vorgesehen ist.

## Claims

1. A monitoring device (1) having at least one safety light curtain (2) and a control and evaluation unit (3) that outputs a control signal that is dependent on a permitted or unpermitted object (4) that penetrates into a protected field (5) of the safety light curtain (2) bounding a monitored zone, wherein
the control and evaluation unit (3) is arranged spatially separate from the safety light curtain (2), with a first safe interface (6) being provided between the control and evaluation unit (3) and the safety light curtain (2), **characterized in that**
at least one recording station (7) is provided, with the recording station (7) being formed by a measuring light curtain (8), with a second safe interface (9) being provided between the control and evaluation unit (3) and the measuring light curtain (8), with a writing device (16) being provided, with the writing device (16) being configured to contactlessly write to respective transponders (12) with the respective object information and/or contour data and/or contour patterns, with at least one contactless recognition device (10) for recognizing the object (4) being provided with which object information stored on a transponder (12) arranged at the object (4) and/or at a carrier device is readable and with the contactless recognition device (10) being connected to the monitoring device (1) or to the control and evaluation unit (3) for forwarding the object information.

2. A monitoring device in accordance with at least one of the preceding claims, **characterized in that** the contactless recognition device (10) is configured as a radio frequency identification system.

3. A monitoring device in accordance with at least one of the preceding claims, **characterized in that** the contactless recognition device (10) is integrated in the safety light curtain (2) and/or in the measuring light curtain (8).

4. A monitoring device in accordance with at least one of the preceding claims, **characterized in that** a horizontal light curtain (15) is additionally arranged in front of the perpendicularly arranged safety light curtain (2) or in front of the perpendicularly arranged measuring light curtain (8).

5. A recording station (7), wherein the recording station (7) is formed by a light curtain, for detecting beam data of an object (4); wherein a control and evaluation unit (3) is provided for forming object information and/or contour data and/or contour patterns for the respective object contours from the beam data; and wherein the object information and/or the contour data and/or the contour patterns is/are stored in an electronic memory of the control and evaluation unit,
**characterized in that**
a writing device (16) is provided, with the writing device (16) being configured to contactlessly write to respective transponders (12) with the respective object information and/or contour data and/or contour patterns, with the writing device (16) being configured as an RFID writing device.

6. A recording station (7) in accordance with claim 5, **characterized in that** the recording station (7) is formed by a measuring light curtain (8) or by a safety light curtain (2).

7. A recording station (7) in accordance with at least one of the preceding claims 5 to 6, **characterized in that** a unique identifier is provided for each object contour.

## Revendications

1. Dispositif de surveillance (1) comportant au moins un rideau lumineux de sécurité (2) et une unité de commande et d'évaluation (3) qui émet un signal de commande qui dépend d'un objet (4) admissible ou inadmissible qui pénètre dans un champ de protection (5) du rideau lumineux de sécurité (2) délimitant une zone à surveiller,
dans lequel
l'unité de commande et d'évaluation (3) est agencée dans l'espace de façon séparée du rideau lumineux (2), une première interface sécurisée (6) étant prévue entre l'unité de commande et d'évaluation (3) et le rideau lumineux de sécurité (2),
**caractérisé en ce que**
il est prévu au moins un poste d'enregistrement (7), le poste d'enregistrement (7) étant formé par un rideau lumineux de mesure (8), une seconde interface sécurisée (9) étant prévue entre l'unité de commande et d'évaluation (3) et le rideau lumineux de mesure (8), un moyen d'écriture (16) étant prévu, le moyen d'écriture (16) étant réalisé pour écrire sans contact des informations d'objet et/ou des données de contour et/ou des motifs de contour respectifs sur des transpondeurs respectifs (12), au moins un moyen de reconnaissance sans contact (10) étant prévu pour reconnaître l'objet (4), permettant de lire des informations d'objet stockées sur un transpondeur (12) agencé sur l'objet (4) et/ou sur un moyen de support, et le moyen de reconnaissance sans contact (10) étant connecté au dispositif de surveillance (1) ou à l'unité de commande et d'évaluation (3) pour acheminer les informations d'objet.

2. Dispositif de surveillance selon l'une au moins des revendications précédentes, **caractérisé en ce que** le moyen de reconnaissance sans contact (10) est réalisé sous forme de système d'identification par radiofréquence.

3. Dispositif de surveillance selon l'une au moins des revendications précédentes, **caractérisé en ce que** le moyen de reconnaissance sans contact (10) est intégré dans le rideau lumineux de sécurité (2) et/ou dans le rideau lumineux de mesure (8).

4. Dispositif de surveillance selon l'une au moins des revendications précédentes, **caractérisé en ce que** un rideau lumineux horizontal (15) est agencé en supplément devant le rideau lumineux de sécurité (2) agencé verticalement ou devant le rideau lumineux de mesure (8) agencé verticalement.

5. Poste d'enregistrement (7), le poste d'enregistrement (7) étant formé par un rideau lumineux, destiné à détecter des données de faisceau d'un objet (4), une unité de commande et d'évaluation (3) étant prévue pour former à partir des données de faisceau des informations d'objet et/ou des données de contour et/ou des motifs de contour pour les contours respectifs de l'objet, les informations d'objet et/ou les données de contour et/ou les motifs de contour étant mémorisés dans une mémoire électronique de l'unité de commande et d'évaluation,
**caractérisé en ce que**
il est prévu un moyen d'écriture (16), le moyen d'écriture (16) étant réalisé pour écrire les informations d'objet et/ou les données de contour et/ou les motifs de contour sans contact sur des transpondeurs respectifs (12), le dispositif d'écriture (16) étant réalisé sous forme de dispositif d'écriture RFID.

6. Poste d'enregistrement (7) selon la revendication 5, **caractérisé en ce que** le poste d'enregistrement (7) est formé par un rideau lumineux de mesure (8) ou par un rideau lumineux de sécurité (2).

7. Poste d'enregistrement (7) selon l'une au moins des revendications précédentes 5 à 6, **caractérisé en ce que** pour chaque contour d'objet, il est prévu un identifiant univoque.
